# EUROPEAN PATENT APPLICATION

(11) **EP 3 525 413 A1**
(43) Date of publication of application: **14.08.2019**
(21) Application number: 18000112.5
(22) Date of filing: 08.02.2018
(51) Int. Cl.: H04L 29/06, H04L 12/801

(54) **CONNECTIONLESS PROTOCOL WITH BANDWIDTH AND CONGESTION CONTROL**

(71) Applicant: Idea Meets Market Beteiligungsgesellschaft mbH, 60322 Frankfurt am Main (DE)
(72) Inventor: The designation of the inventor has not yet been filed

(57) **Abstract**

The present disclosure relates to A method for the transmission of data objects via a connectionless protocol between a server and a client, wherein each data object is subdivided into n data packets, with n = 1, 2, 3, 4, 5, or more, by the server, and wherein the sever is transmitting said data packets from said sever to said client, wherein the data packets are transmitted by the client with a reference bandwidth X and in particular with a reference maximum transmission unit (MTU) U, wherein the reference bandwidth and/or the reference MTU is determined by the server with a reference measurement to the client in advance to the sending of the first data package of the first data object.

## Description

The entrenchment of data networking into the routines of modern society has placed ever-growing demands on service providers to continually improve network performance. To meet this challenge, service providers have invested heavily in upgrading their networks to increase system capacity (i.e., bandwidth) for wire and wireless communication.

In many circumstances, such upgrades may not be feasible economically or the physical constraints of the communication system does not permit simply "upgrading." Accordingly, service providers have also invested in developing techniques to optimize the performance of their networks. One particular problem not solved yet is the increasing latency in long distance communications.

Because much of today's networks are either operating with or are required to interface with the Transmission Control Protocol/Internet Protocol (TCP/IP) suite, attention has been focused on optimizing TCP/IP based networking operations.

As the networking standard for the global Internet, the transmission control protocol (TCP) is the dominant protocol in use today on the Internet. TCP is carried by the Internet protocol (IP) and is used in a variety of applications including reliable file transfer and Internet web page access applications. The four layers of the TCP/IP protocol suite are the link layer or the network interface layer which includes device drivers in the operating system and any corresponding network interface cards. Together, the device driver and the interface cards handle hardware details of physically interfacing with any cable or whatever type of media that is being used.

The network layer, also referred to as the Internet layer, as the next layer handles the movement of packets around the network. Routing of packets, for example, takes place at the network layer. IP, Internet control message protocol (ICMP), and Internet group management protocol (IGMP) may provide the network layer in the TCP/IP protocol suite. The remaining two layers are the transport layer that provides a flow of data between two hosts, for the application layer above.

In the TCP/IP protocol suite, there are at least two different transport protocols, TCP and a user datagram protocol (UDP). TCP is connection oriented and UDP connectionless.

TCP provides a reliable flow of data between two hosts and is primarily concerned with dividing the data passed to it from the application layer into appropriately sized segments for the network layer below. It is acknowledging received packets, setting timeouts to make certain the other end acknowledges packets that are sent, and so on.

Because this reliable flow of data is provided by the transport layer, the application layer is isolated from these details.

UDP, on the other hand, provides a much simpler service to the application layer. UDP just sends packets of data called datagrams from one host to another, with no guarantee that the datagrams will reach their destination. Any desired reliability must be added by a higher layer, such as the application layer. UDP is thereofre mainly used for broadcasting services, e.g. for video streaming.

The application layer handles the details of the particular application. TCP is one of the core protocols of the Internet protocol suite (IP) described in RFC 675 and RFC 793, and the entire suite is often referred to as TCP/IP. TCP provides reliable, ordered and error-checked delivery of a stream of octets between programs running on computers connected to a local area network, intranet or the public Internet. It resides at the transport layer. Web browsers typically use TCP when they connect to servers on the World Wide Web, and used to deliver email and transfer files from one location to another. HTTP, HTTPS, SMTP, POP3, IMAP, SSH, FTP, Telnet and a variety of other protocols that are typically encapsulated in TCP. As the transport layer of TCP/IP suite, the TCP provides a communication service at an intermediate level between an application program and the Internet Protocol (IP).

As mentioned, TCP provides reliable, in-sequence delivery of data between two IP hosts. The IP hosts set up a TCP connection, using a conventional TCP three-way handshake and then transfer data using a window based protocol with the successfully received data acknowledged.

TCP was designed to be very flexible. In addition, TCP was designed to work over a wide variety of communication links, including both slow and fast links, high latency links, and links with low and high error rates. However, while TCP (and other high layer protocols) works with many different kinds of links, TCP performance, in particular, the throughput possible across the TCP connection, is affected by the characteristics of the link in which it is used.

Due to network congestion, traffic load balancing, or other unpredictable network behavior, IP packets can be lost, duplicated, or delivered out of order. TCP detects these problems, requests retransmission of lost data, rearranges out-of-order data, and even helps minimize network congestion to reduce the occurrence of the other problems. Once the TCP receiver has reassembled the sequence of octets originally transmitted, it passes them to the receiving application. Thus, TCP abstracts the application's communication from the underlying networking details. The TCP is utilized extensively by many of the Internet's most popular applications, including the World Wide Web (WWW), E-mail, File Transfer Protocol, Secure Shell, peer-to-peer file sharing, and some streaming media applications.]

While IP layer handles actual delivery of the data, TCP keeps track of the individual units of data transmission, called segments, which a message is divided into for efficient routing through the network. For example, when an HTML file is sent from a web server, the TCP software layer of that server divides the sequence of octets of the file into segments and forwards them individually to the IP software layer (Internet Layer). The Internet Layer encapsulates each TCP segment into an IP packet by adding a header that includes (among other data) the destination IP address. When the client program on the destination computer receives them, the TCP layer (Transport Layer) reassembles the individual segments and ensures they are correctly ordered and error free as it streams them to an application.

The TCP protocol operations may be divided into three phases. Connections must be properly established in a multi-step handshake process (connection establishment) before entering the data transfer phase. After data transmission is completed, the connection termination closes established virtual circuits and releases all allocated resources. A TCP connection is typically managed by an operating system through a programming interface that represents the local end-point for communications, the Internet socket. During the duration of a TCP connection, the local end-point undergoes a series of state changes.

To understand where optimizations may be made, it is instructive to consider a typical TCP connection establishment. At the beginning, the IP host that wishes to initiate a transfer with another IP host, sends a synchronize (SYN) signal to said other IP host. The other IP host acknowledges the SYN signal from first IP host by sending a SYN acknowledgement (ACK). The third step of the conventional TCP three-way handshake is the issuance of an ACK signal from the IP host to the other IP host. At this point, the other IP host is ready to receive the data from the first IP host (and vice versa). After all the data has been delivered, another handshake (similar to the handshake described to initiate the connection) is used to close the TCP connection.

Since TCP/IP is based on the client/server model of operation, the TCP connection setup always involves the client and server preparing for the connection by the way of an OPEN operation. A client process initiates a TCP connection by performing an active OPEN, sending a SYN message to a server. A server process using TCP prepares for an incoming connection request by performing a passive OPEN. Both devices create for each TCP session a data structure used to hold important data related to the connection, called a Transmission Control Block (TCB).

There are two different kinds of OPEN, named 'Active OPEN' and 'Passive OPEN'. In Active OPEN the client process using TCP takes the "active role" and initiates the connection by actually sending a TCP message to start the connection (a SYN message). In Passive OPEN the server process designed to use TCP is contacting TCP and saying: "I am here, and I am waiting for clients that may wish to talk to me to send me a message on the following port number". The OPEN is called passive because aside from indicating that the process is listening, the server process does nothing. A passive OPEN can in fact specify that the server is waiting for an active OPEN from a specific client, though not all TCP/IP APIs support this capability. More commonly, a server process is willing to accept connections from all corners. Such a passive OPEN is said to be unspecified.

In passive OPEN, the TCP uses a three-way handshake, and before a client attempts to connect with a server, the server must first bind to and listen at a port to open it up for connections. Once the Passive OPEN is established, a client may initiate an Active OPEN. To establish a connection, the already discussed three-way (or 3-step) handshake occurs.

In particular in case of high latency, TCP is very slow. Therefore, the use of performance enhancing proxies (PEPs), to perform a general class of functions termed "TCP spoofing," in order to improve TCP performance over impaired (i.e., high latency or high error rate) links. TCP spoofing involves an intermediate network device (the performance enhancing proxy (PEP)) intercepting and altering, through the addition and/or deletion of TCP segments, the behavior of the TCP connection in an attempt to improve its performance.

Conventional TCP spoofing implementations include the local acknowledgement of TCP data segments in order to get the TCP data sender to send additional data sooner than it would have sent if spoofing were not being performed. Thus, with spoofing the throughput of the TCP connection is improved. Generally, conventional TCP spoofing implementations have focused simply on increasing the throughput of TCP connections either by using larger windows over the link or by using compression to reduce the amount of data which needs to be sent, or both. But it is obvious that the general problem of a slow data transmission due to the three way handshake protocol can not be solved in its entirety by spoofing alone.

Many TCP PEP implementations are based on TCP ACK manipulation. These may include TCP ACK spacing where ACKs which are bunched together are spaced apart, local TCP ACKs, local TCP retransmissions, and TCP ACK filtering and reconstruction. Other PEP mechanisms include tunneling, compression, and priority-based multiplexing.

Even though many ideas have been realized, the generel problems with a connection oriented protocol like TCP in particular in case of high latency is not solved.

Based on the foregoing, there is a clear need for improved approaches to optimizing network performance, while achieving flexibility. This objective is crucial in light of increasing internet traffic and many georgrafical areas wich go along with high latency. There is also a need to enhance network performance, without a costly infrastructure investment. There is also a need to employ a network performance enhancing mechanism that complies with existing standards to facilitate rapid deployment. There is a further need to simplify the receiver design. Therefore, an approach for optimizing network performance using fast protocol with the securit of the connection orientend TCP protocol is highly desirable.

This problem is solved by a method for the transmission of data objects via a connectionless protocol between a server and a client, wherein each data object is subdivided into n data packets, with n = 1, 2, 3, 4, 5, or more, by the server, and wherein the sever is transmitting said data packets from said sever to said client, wherein the data packets are transmitted by the client with a reference bandwidth X and in particular with a reference maximum transmission unit (MTU) U, wherein the reference bandwidth and/or the reference MTU is determined by the server with a reference measurement to the client in advance to the sending of the first data package of the first data object.

It has been a finding of the present disclosure that the bandwidth between the client and the server and the maximum transmission unit are the most relevant factors for a stable data transfer. If the server is sending too much packets in parallel, in particular an amount of packets exceeding the possible bandwidth, the packet loss rate is significantly increasing. In this case too many packets are lost and due to the necessary retransmissions the data transmissions takes longer than necessary. In addition, the MTU between the client and the server has to be individually indentified. This of relevance as if the packet size is too large to be forwarded during routing, said packet has to be defragmented by the local switch and re-assembled later on which takes time and is a source of potential errors.

It may thereby be of advantage that the reference bandwidth and/or the reference MTU is determined by the server with a reference measurement to the client in advance to the sending of the first data package of the first data object.

Such a reference measurment may take place before the first data object is transmitted. There are several methods disclosed in the prior art how to determine the MTU and a possible bandwidth, in general these methods are focused on the fact how many pakets are loss or which packet size is not transmitted fragmented.

Unless otherwise indicated herein, the materials described in this section are not prior art to the claims in this application and are not admitted to be prior art by inclusion in this section. The subsequent definitions shall help to understand the used terms and define the same for the disclosure of the application and its claims only.

The Internet is a global system of interconnected computer networks that use the standardized Internet Protocol Suite (TCP/IP), including Transmission Control Protocol (TCP) and the Internet Protocol (IP), to serve billions of users worldwide. The internet is a network of networks that consists of millions of private, public, academic, business, and government networks, of local to global scope, that are linked by a broad array of electronic and optical networking technologies.

The Internet carries a vast range of information resources and services, such as the interlinked hypertext documents on the World Wide Web (WWW) and the infrastructure to support electronic mail. The Internet backbone refers to the principal data routes between large, strategically interconnected networks and core routers in the Internet.

The Internet Protocol (IP) is the principal communications protocol used for relaying datagrams (packets) across a network using the Internet Protocol Suite. Responsible for routing packets across network boundaries, it is the primary protocol that establishes the Internet. IP is the primary protocol in the Internet Layer of the Internet Protocol Suite and has the task of delivering datagrams from the source host to the destination host based on their addresses. For this purpose, IP defines addressing methods and structures for datagram encapsulation. Internet Protocol Version 4 (IPv4) is the dominant protocol of the Internet. IPv4 is described in Internet Engineering Task Force (IETF) Request for Comments (RFC) 791 and RFC 1349, and the successor, Internet Protocol Version 6 (IPv6), is currently active and in growing deployment worldwide. IPv4 uses 32-bit addresses (providing 4 billion: 4.3×10⁹ addresses), while IPv6 uses 128-bit addresses (providing 340 undecillion or 3.4×10³⁸ addresses), as described in RFC 2460.

The packet may be generally segmented into the IP data to be carried as payload, and the IP header. The IP header contains the IP address of the source as Source IP Address field and the Destination IP Address field. In most cases, the IP header and the payload are further encapsulated by adding a Frame Header and Frame Footer used by higher layer protocols.

The Internet Protocol is responsible for addressing hosts and routing datagrams (packets) from a source host to the destination host across one or more IP networks. For this purpose the Internet Protocol defines an addressing system that has two functions. Addresses identify hosts and provide a logical location service. Each packet is tagged with a header that contains the meta-data for the purpose of delivery. This process of tagging is also called encapsulation. IP is a connectionless protocol for use in a packet-switched Link Layer network, and does not need circuit setup prior to transmission. The aspects of guaranteeing delivery, proper sequencing, avoidance of duplicate delivery, and data integrity are addressed by an upper transport layer protocol (e.g., TCP-Transmission Control Protocol and UDP-User Datagram Protocol).

An Internet packet typically includes a value of Time-to-live (TTL) for avoiding the case of packet looping endlessly. The Internet architecture employs a client-server model, among other arrangements. The terms 'server' or 'server computer' relates herein to a device or computer (or a plurality of computers) connected to the Internet and is used for providing facilities or services to other computers or other devices (referred to in this context as 'clients') connected to the Internet. A server is commonly a host that has an IP address and executes a 'server program', and typically operates as a socket listener. Many servers have dedicated functionality such as web server, Domain Name System (DNS) server (described in RFC 1034 and RFC 1035), Dynamic Host Configuration Protocol (DHCP) server (described in RFC 2131 and RFC 3315), mail server, File Transfer Protocol (FTP) server and database server. Similarly, the term 'client' is used herein to include, but not limited to, a program or to a device or a computer (or a series of computers) executing this program, which accesses a server over the Internet for a service or a resource. Clients commonly initiate connections that a server may accept. For non-limiting example, web browsers are clients that connect to web servers for retrieving web pages, and email clients connect to mail storage servers for retrieving mails.

The Hypertext Transfer Protocol (HTTP) is an application protocol for distributed, collaborative, hypermedia information systems, commonly used for communication over the Internet. HTTP is the protocol to exchange or transfer hypertext, which is a structured text that uses logical links (hyperlinks) between nodes containing text. HTTP version 1.1 was standardized as RFC 2616 (June 1999), which was replaced by a set of standards (obsoleting RFC 2616), including RFC 7230-HTTP/1.1: Message Syntax and Routing, RFC 7231-HTTP/1.1: Semantics and Content, RFC 7232-HTTP/1.1: Conditional Requests, RFC 7233-HTTP/1.1: Range Requests, RFC 7234-HTTP/1.1: Caching, and RFC 7235-HTTP/1.1: Authentication. HTTP functions as a request-response protocol in the client-server computing model. A web browser, for example, may be the client and an application running on a computer hosting a website may be the server. The client submits an HTTP request message to the server. The server, which provides resources such as HTML files and other content, or performs other functions on behalf of the client, returns a response message to the client. The response contains completion status information about the request and may also contain requested content in its message body. A web browser is an example of a user agent (UA). Other types of user agent include the indexing software used by search providers (web crawlers), voice browsers, mobile apps and other software that accesses, consumes or displays web content.

HTTP is designed to permit intermediate network elements to improve or enable communications between clients and servers. High-traffic websites often benefit from web cache servers that deliver content on behalf of upstream servers to improve response time. Web browsers cache previously accessed web resources and reuse them when possible, to reduce network traffic. HTTP proxy servers at private network boundaries can facilitate communication for clients without a globally routable address, by relaying messages with external servers.

An Operating System (OS) is software that manages computer hardware resources and provides common services for computer programs. The operating system is an essential component of any system software in a computer system, and most application programs usually require an operating system to function

A server device (in server/client architecture) typically offers information resources, services, and applications to clients, and is using a server dedicated or oriented operating system. Current popular server operating systems are based on Microsoft Windows (by Microsoft Corporation, headquartered in Redmond, Wash., U.S.A.), Unix, and Linux-based solutions.

A client device (in server/client architecture) typically receives information resources, services, and applications from servers, and is using a client dedicated or oriented operating system.

A mobile operating system (also referred to as mobile OS), is an operating system that operates a smartphone, tablet, PDA, or other mobile device. Modern mobile operating systems combine the features of a personal computer operating system with other features, including a touchscreen, cellular, Bluetooth, Wi-Fi, GPS mobile navigation, camera, video camera, speech recognition, voice recorder, music player, near field communication and infrared blaster.

A client/server networking allows a program on a computer, called a client, to connect via a network to another computer, called a server. Servers offer (or host) various services to other network computers and users. These services are usually provided through ports or numbered access points beyond the server's network address. Each port number is usually associated with a maximum of one running program, which is responsible for handling requests to that port. A daemon, being a user program, can in turn access the local hardware resources of that computer by passing requests to the operating system kernel.

A web browser (commonly referred to as a browser) is a software application for retrieving, presenting, and traversing information resources on the World Wide Web. An information resource is identified by a Uniform Resource Identifier (URI/URL) and may be part of a web page, a web-page, an image, a video, or any other piece of content. Hyperlinks present in resources enable users easily to navigate their browsers to related resources. Although browsers are primarily intended to use the World Wide Web, they can also be used to access information provided by web servers in private networks or files in file systems. The primary purpose of a web browser is to bring information resources to the user ("retrieval" or "fetching"), allowing them to view the information ("display", "rendering"), and then access other information ("navigation", "following links"). Currently the major web browsers are known as Firefox, Internet Explorer, Google Chrome, Opera, and Safari.

A headless browser is a web browser without a graphical user interface. Headless browsers provide automated control of a web page in an environment similar to popular web browsers, but are executed via a command-line or using network communication. They are particularly useful for testing web pages as they are able to render and understand HTML the same way a browser would, including styling elements such as page layout, colour, font selection and execution of Java Script and Ajax which are usually not available when using other testing methods.

The term "processor" is used herein to include, but not limited to, any integrated circuit or other electronic device (or collection of devices) capable of performing an operation on at least one instruction, including, without limitation, Reduced Instruction Set Core (RISC) processors, CISC microprocessors, Microcontroller Units (MCUs), CISC-based Central Processing Units (CPUs), and Digital Signal Processors (DSPs). The hardware of such devices may be integrated onto a single substrate (e.g., silicon "die"), or distributed among two or more substrates. Furthermore, various functional aspects of the processor may be implemented solely as software or firmware associated with the processor.

A computer system may be used for implementing the methods and techniques described herein. According to one embodiment, those methods and techniques are performed by the computer system in response to the processor executing one or more sequences of one or more instructions contained in a main memory. Such instructions may be read into the main memory from another computer-readable medium, such as a storage device .

A proxy server is a server (a computer system or an application) that acts as an intermediary for requests from clients seeking resources from other servers. A client connects to the proxy server, requesting some service, such as a file, connection, web page, or other resource, available from a different server and the proxy server evaluates the request as a way to simplify and control its complexity. Proxies may be used to add structure and encapsulation to distributed systems. Today, most proxies are web proxies, facilitating access to content on the World Wide Web and providing anonymity. A proxy server may reside on the user's local computer, or at various points between the user's computer and destination servers on the Internet. A proxy server that passes requests and responses unmodified is usually called a gateway or sometimes a tunneling proxy.

A forward proxy is an internet-facing proxy used to retrieve from a wide range of sources (in most cases anywhere on the Internet). Forward proxies are proxies in which the client server names the target server to connect to, and are able to retrieve from a wide range of sources (in most cases anywhere on the Internet). An open proxy is a forwarding proxy server that is accessible by any Internet user, while browsing the Web or using other Internet services. There are varying degrees of anonymity, however, as well as a number of methods of 'tricking' the client into revealing itself regardless of the proxy being used. A reverse proxy is usually an Internet-facing proxy used as a front-end to control and protect access to a server on a private network. A reverse proxycommonly also performs tasks such as load-balancing, authentication, decryption or caching.

Computer networks may use a tunneling protocol where one network protocol (the delivery protocol) encapsulates a different payload protocol. Tunneling enables the encapsulation of a packet from one type of protocol within the datagram of a different protocol. For example, VPN uses PPTP to encapsulate IP packets over a public network, such as the Internet. A VPN solution based on Point-to-Point Tunneling Protocol (PPTP), Layer Two Tunneling Protocol (L2TP), or Secure Socket Tunneling Protocol (SSTP) can be configured. By using tunneling a payload may be carried over an incompatible delivery-network, or provide a secure path through an untrusted network. Typically, the delivery protocol operates at an equal or higher OSI layer than does the payload protocol.

Plug-in. A plug-in (or 'plugin', 'extension', or 'add-on'/'addon') is a software component that adds a specific feature to an existing software application, for example for enabling customization. The common examples are the plug-ins used in web browsers to add new features such as search-engines, virus scanners, or the ability to utilize a new file type such as a new video format. An 'Add-on' (or 'addon') is the general term for what enhances an application, and comprises snap-in, plug-in, theme, and skin. An extension add-on tailors the core features of an application by adding an optional module, whereas a plug-in add-on would tailor the outer layers of an application to personalize functionality.

Browser extension. A browser extension is a computer program that extends the functionality of a web browser in some way. Extensions can be created through use of web technologies such as HTML, JavaScript, and CSS. Browser extensions can also improve the user interface of the web browser without directly affecting viewable content of a web page, which can be achieved through a variety of add ons such as toolbars and plug-ins.

Sockets. A socket (a.k.a. 'network socket') is an endpoint of an IPC flow across a computer network. In the case the communications is based on IP (Internet Protocol), the network sockets are referred to as Internet sockets. A socket API is an application programming interface (API), usually provided by the operating system, that allows application programs to control and use network sockets. Internet socket APIs are usually based on the Berkeley sockets standard. A socket address is the combination of an IP address and a port number, similar to one end of a telephone connection in the combination of a phone number and a particular extension. Based on this address, internet sockets deliver incoming data packets to the appropriate application process or thread. Sockets are further described in a University of Toronto, Department of Computer Science presentation entitled: "Tutorial on Socket Programming" by Amin Tootoonchian, downloaded on August, 2014, and in the SAS Institute Inc. SHARE Session 5958 tutorial 'C Socket Programming Tutorial' entitled: "Writing Client/Server Programs in C Using Sockets (A Tutorial) Part 1", by Greg Granger, dated February of 1998, which are both incorporated in their entirety for all purposes as if fully set forth herein.

An Internet socket is characterized by a unique combination of a Local socket address (Local IP address and port number), remote socket address (used for established TCP sockets), and the used Protocol, typically a transport protocol (e.g., TCP, UDP, raw IP, or others). Within the operating system and the application that created a socket, a socket is referred to by a unique integer value called a socket descriptor. The operating system forwards the payload of incoming IP packets to the corresponding application by extracting the socket address information from the IP and transport protocol headers and stripping the headers from the application data.

Several Internet socket types are available, such as Datagram sockets, also known as connectionless sockets, which use User Datagram Protocol (UDP), Stream sockets, also known as connection-oriented sockets, which use Transmission Control Protocol (TCP) or Stream Control Transmission Protocol (SCTP), and Raw sockets (or Raw IP sockets), typically available in routers and other network equipment. Here the transport layer is bypassed, and the packet headers are made accessible to the application. Other socket types are implemented over other transport protocols, such as Systems Network Architecture (SNA). Communicating local and remote sockets are called socket pairs. Each socket pair is described by a unique 4-tuple consisting of source and destination IP addresses and port numbers, i.e. of local and remote socket addresses. In the TCP case, each unique socket pair 4-tuple is assigned a socket number, while in the UDP case, each unique local socket address is assigned a socket number.

The socket is primarily a concept used in the Transport Layer of the Internet model. Networking equipment such as routers and switches do not require implementations of the Transport Layer, as they operate on the Link Layer level (switches) or at the Internet Layer (routers). However, stateful network firewalls, network address translators, and proxy servers keep track of active socket pairs. Also in fair queuing, layer 3 switching and quality of service (QoS) support in routers, packet flows may be identified by extracting information about the socket pairs. Raw sockets are typically available in network equipment and are used for routing protocols such as IGRP and OSPF, and in Internet Control Message Protocol (ICMP).

The amount of data transferred in a given period in commonly referred to as 'bandwidth' (BW) or 'bit-rate', which is the number of bits that are conveyed or processed per unit of time. The bit rate is quantified using the bits per second unit (symbol bit/s or b/s), often in conjunction with an SI prefix such as kilo- (1 kbit/s=1000 bit/s), mega- (1 Mbit/s=1000 kbit/s), giga- (1 Gbit/s=1000 Mbit/s) or tera- (1 Tbit/s=1000 Gbit/s). The non-standard abbreviation bps is often used to replace the standard symbol bit/s, so that, for example, "1 Mbps" (or 1 Mb/s) is used to mean one million bits per second. One byte per second (1 B/s) corresponds to 8 bit/s.

Latency is typically defined as a time interval between the stimulation and the response, or, from a more general point of view, as a time delay between the cause and the effect of some physical change in the system being observed. Network-related latency, such as in a packet-switched network, is measured either one-way (the time from the source sending a packet to the destination receiving it), or Round-Trip delay Time (RTT), referring to the one-way latency from source to destination plus the one-way latency from the destination back to the source, plus any delays at the destination, such as processing or other delays. Round-trip latency can be measured from a single point. Latency limits total bandwidth in reliable two-way communication systems as described by the bandwidth-delay product, which refers to the product of a data link's capacity (in bits per second) and its end-to-end delay (in seconds). The result, an amount of data measured in bits (or bytes), is equivalent to the maximum amount of data on the network circuit at any given time, i.e., data that has been transmitted but not yet acknowledged. Sometimes it is calculated as the data link's capacity multiplied by its round trip time. A network with a large bandwidth-delay product is commonly known as a Long Fat Network (LFN). As defined in IETF RFC 1072, a network is considered an LFN if its bandwidth-delay product is significantly larger than 105 bits (12500 bytes).

The Round-trip Delay Time (RTD) or Round-Trip Time (RTT) is the length of time it takes for a signal to be sent and to be received and processed at the destination node, plus the length of time it takes for an acknowledgment of that signal to be received. This time delay therefore includes the propagation times between the two points of a signal. The signal is generally a data packet, and the RTT is also known as the ping time, and an internet user can determine the RTT by using the ping command. Network links with both a high bandwidth and a high RTT can have a very large amount of data (the bandwidth-delay product) "in flight" at any given time. Such "long fat pipes" require a special protocol design. One example is the TCP window scale option

Many software platforms provide a service called 'ping' that can be used to measure round-trip latency. Ping performs no packet processing; it merely sends a response back when it receives a packet (i.e., performs a no-op), thus it is a first rough way of measuring latency. Ping operates by sending Internet Control Message Protocol (ICMP) echo requesting packets to the target host, and waiting for an ICMP response. During this process it measures the time from transmission to reception (round-trip time) and records any packet loss. The results of the test are printed in a form of a statistical summary of the response packets received, including the minimum, maximum, and the mean round-trip times, and sometimes the standard deviation of the mean.

The term 'gateway' is used herein to include, but not limited to, a network element (or node) that is equipped for interfacing between networks that uses different protocols. A gateway typically contains components such as protocol translators, impedance matching devices, rate converters, fault isolators, or signal translators, as necessary to provide networking interoperability. A gateway may be a router or a proxy server that routes between networks, and may operate at any network layer. In a network for an enterprise, a computer server acting as a gateway node is often also acting as a proxy server and a firewall server. A gateway is often associated with both a router, which knows where to direct a given packet of data that arrives at the gateway, and a switch, which furnishes the actual path in and out of the gateway for a given packet.

A subnet mask is a mask used to determine what subnet belongs to an IP address. An IP address has two components, the network address and the host address. For example, consider the IP address 150.215.017.009. Assuming this is part of a Class B network, the first two numbers (150.215) represent the Class B network address, and the second two numbers (017.009) identify a particular host on this network. A subnetting enables the network administrator to further divide the host part of the address into two or more subnets. In this case, a part of the host address is reserved to identify the particular subnet.

The maximum transmission unit (MTU) is the size of the largest network layer protocol data that can be communicated in a single network transaction. Fixed MTU parameters usually appear in association with a communications interface or standard. Some systems may decide MTU at connect time. The MTU relates to, but is not identical with the maximum frame size that can be transported on the data link layer, e.g. Ethernet frame.

Larger MTU is associated with reduced overhead. Smaller values can reduce network delays. In many cases MTU is dependent on underlying network capabilities and must be or should be adjusted manually or automatically so as not to exceed these capabilities.

HTTP header fields are components of the header section of request and response messages in the discussed HTTP. They define the operating parameters of an HTTP transaction.

The header fields are transmitted after the request or response line, which is the first line of a message. Header fields are colon-separated name-value pairs in clear-text string format, terminated by a carriage return (CR) and line feet (LF) character sequence. The end of the header section is indicated by an empty field(line), resulting in the transmission of two consecutive CR-LF pairs. In the past, long lines could be folded into multiple lines; continuation lines are indicated by the presence of a space (SP) or horizontal tab (HT) as the first character on the next line.

One advantage of the present disclosure lays in the fact that the packet loss rate of packets in connectionless protocolls may be very high. By determining the optiomal and/or maximal possible bandwidth in advance as a reference bandwidth it is possible to reduce the packet losses to a minimum. As this effect is crucial for the effectiveness of a transport protocol, the qualty of service of the connectionless protocol according to the present disclosure is much higher than the one of conventional networks.

Comared to connection-oriented protocols like TCP as discussed before, a connectionless protocol is not high dependent on the latency of a connection between a server and a client. Instead, a data object according to the present disclosure can simply be divided into n sub-packets and said n data packets are than re-assembled at the client.

Therewith it is possible not only to use connectionless protocols for broadcasting, but as well for the secure data transmission of all kinds of data. At the end it can be ensured that all data packets are transmitted and arranged in the correct order by the client with the help of the individual identification object of each package.

It may be of advantage that each data packet comprises an individual identification object which is part of the payload and located at the beginning of the payload.

Thereby it may be of advantage that the individual identification comprises a data pointer.

Another advantage of the present disclosure lays in the surpsing finding that by integrating addition information by the help of an individual indentification object in the payload the it will be able to track the data packets send and to identify whether a complete data object has been transmitted with a conectionless protocol.

As well, according to one example of the present disclosure it may be of advantage that the data packets are transmitted independent of each other by the server, in particular in parallel, while the individual identification object of each of the first data packets comprises a data identifier representative for the type of data transmitted, in particular representable for compressed, uncompressed, retransmitted data.

It may be of advantage that the individual identification object of at least the first data packages comprises a data identifier representative for the type of data transmitted and a pointer. It may be preferred that all data packets comprise such a pointer. According to one embodiment of the present disclosure, the first pointer Ptr0 is zero, the second pointer Ptr1 is the sum of Ptr0 and the pay load length PLL1. The further pointers are according to this embodiment calculated by Ptrx = Ptr(x-1) + PLL(x). Each transmitted packets of the present connectionless protocol has therefore an ascending pointer value which can be used to recognzie out of order arrivals or missing packets without a need to inform the client in advance about the amount of packets or their length etc.

It may thereby be preferred that one of the data packets is an termination packet representative for the end of the transmission.

Such a termination packets indicates to the data object is completely transferred by the server.

The method according to any of the preceding claims, wherein
a HTTP-Header is comprised by the individual identification object, and in particular arranged between the data identifier and the payload.

Such a HTTP-Header field is already discussed above and is useful for the client to sort the incoming data objects, priotize the same and to learn what to do with the same before receiving the full data object right at the beginning of the data transfer.

As well, it is preferred according to one embodiment of the present disclosure that the data packets are arranged in ascending order by the client, wherein after a predetermined time A the client ask for a retransmission of a packet in case of a missing packet during the ordering of the packets by the help of a retransmission request to the server.

A retransmission event happens according to one embodiment of the present disclosure in the case that there is a break in the ascending incoming order of packet pointers which may be caused by a delayed or lost packet. In this case, it is of advantage according to one embodiment of the present disclosure to wait for a time A if a delayed packet arrives before a missing packet causes a retransmission request. As the packets are send via a connectionless protocol all packets may use different routing ways so that a different arrival time is not indetical with a lost of packets.

The time A shall according to one embodiment dependent of the measured round trip time (RTT) which was discussed in general before. It would e.g. makes in most cases no sense to set the time A shorter than the RTT, instead it may be prefered that the time A is at least 10%, 20%, 50%, or 100% longer than the RTT between the server and the client.

According to one example of the disclosure it may be of advantage that the retransmission request comprises an aggregation of all packages that are missing including packages that are missing for a time B, while time B is shorter than time A.

As discussed before, it is of advanteage no to request a retransmission of packages within a time frame short than the RTT. But it makes sense that in case a packet loss is recognized that all missing and/or potential missing packets are request at the same time. This is due to the fact that it will take time to send this request and receive the resent packets. The time B may be lower than time A, but at least identical or longer than the RTT.

According to one embodiment, the connectionless protocol is UDP.

As well, according to one example of the present disclosure, the reference bandwidth X is increased in case of a packet loss lower than Y percent of all received packages and decreased in case of packet loss higher than Z percent of all received packages.

Once the initial bandwidth is determined the same may change over time. Therefore it is of advantage that the actual bandwidth as the basis for the data transmission of the server is up to date. To determine the optimal bandwidth it make sense to increase and lower the bandwidth based on the packet loss rate. If the packet loss rate is quite low, a higher bandwidth may be possible. If the packet loss rate exceeds a certain percentage, the amount of packets sent per time should be reduced.

Furthermore it may be of advantage that the reference bandwidth is changed only after the package loss is measured for longer than a predetermined time interval T, T being between 50ms and 5s, in particular between 100ms and 500ms.

Measurements showed that sometimes there are interruptions in the data transmission which take place only for very short periods of time. Such interruptions should not result in a change of the reference bandwidth as this will increase the transmission time without any need. Therefore it is desired that a packet loss must be occure for a minimal time period to influence the reference bandwidth.

Thereby is may be preferred that if a packet loss higher than Z is identified, the reference bandwidth is reduced between 5 and 15%, if a packet loss lower than Y is identified, the reference bandwidth is increased between 5 and 15%, in particular within a time span between 100ms and 2 seconds.

Compared to TCP it may be of advantage not to restart the connection from the very beginning with a very low reference bandwidth, but to make small adjustments as in most cases the bandwidth changes within the above ranges.

It may be possible and preffered that the packet loss rate Y is lower than 5%, preferably lower than 2%, in particular lower than 1% and the packet loss rate Z is higher than 0,1%, in particular higher than 0,5%, preferably higher than 1%.

Finally it could be of advantage that the server provides a services for the client to determine the reference bandwidth independent of a transmission of a data package, wherein the client sends its ID to the server and the server sends test packages to the client to identify the reference bandwidth with a testing method.

## Claims

1. A method for the transmission of data objects via a connectionless protocol between a server and a client, wherein each data object is subdivided into n data packets, with n = 1, 2, 3, 4, 5, or more, by the server, and wherein the sever is transmitting said data packets from said sever to said client, **characterized in that** the data packets are transmitted by the client with a reference bandwidth X and in particular with a reference maximum transmission unit (MTU) U, wherein the reference bandwidth and/or the reference MTU is determined by the server with a reference measurement to the client in advance to the sending of the first data package of the first data object.

2. The method according to claim 1, wherein
the reference bandwidth X is increased in case of a packet loss lower than Y percent of all received packages and decreased in case of packet loss higher than Z percent of all received packages.

3. The method according to claim 2, wherein
the reference bandwidth is changed only after the package loss is measured for longer than a predetermined time interval T, T being between 50ms and 5s, in particular between 100ms and 500ms.

4. The method according to any of the proceeding claims, wherein
if a packet loss higher than Z is identified, the reference bandwidth is reduced between 5 and 15%, if a packet loss lower than Y is identified, the reference bandwidth is increased between 5 and 15%, in particular within a time span between 100ms and 2 seconds.

5. The method according to any of the proceeding claims, wherein
the packet loss rate Y is lower than 5%, preferably lower than 2%, in particular lower than 1% and the packet loss rate Z is higher than 0,1%, in particular higher than 0,5%, preferably higher than 1%.

6. The method according to any of the proceeding claims, wherein
the server provides a services for the client to determine the reference bandwidth independent of a transmission of a data package, wherein the client sends its ID to the server and the server sends test packages to the client to identify the reference bandwidth with a testing method.

7. The method according to any of the proceeding claims, wherein
each data packet comprises an individual identification object which is part of the payload and located at the beginning of the payload.

8. The method according to any of the proceeding claims, wherein
the individual identification object comprises a data pointer.

9. The method according to any of the proceeding claims, wherein
the data packets are transmitted independent of each other by the server, in particular in parallel, while the individual identification object of each of the first data packets comprises a data identifier representative for the type of data transmitted, in particular representable for compressed, uncompressed, retransmitted data.

10. The method according to any of the preceding claims, wherein
one of the data packets is an termination packet representative for the end of the transmission.

11. The method according to any of the preceding claims, wherein
a HTTP-Header is comprised by the individual identification object, and in particular arranged between the data identifier and the payload.

12. The method according to any of the preceding claims, wherein
the data packets are arranged in ascending order by the client, wherein after a predetermined time A the client ask for a retransmission of a packet in case of a missing packet during the ordering of the packets by the help of a retransmission request to the server.

13. The method according to claim 12, wherein
the retransmission request comprises an aggregation of all packages that are missing including packages that are missing for a time B, while time B is shorter than time A.

14. The method according to any of the preceding claims, wherein
the connectionless protocol is UDP.
